Europäisches Patentamt

European Patent Office

Office européen des brevets

(11) Numéro de publication: **0 486 347 B1**

# FASCICULE DE BREVET EUROPEEN

(45) Date de publication de fascicule du brevet: **08.02.95**

(51) Int. Cl.⁶: **C04B 41/87**, C04B 41/88, C04B 41/89, C04B 35/52

(21) Numéro de dépôt: **91402844.4**

(22) Date de dépôt: **24.10.91**

(54) **Procédé pour la protection antioxydation d'un matériau composite contenant du carbone, et matériau ainsi protégé.**

(30) Priorité: **26.10.90 FR 9013319**

(43) Date de publication de la demande:
**20.05.92 Bulletin 92/21**

(45) Mention de la délivrance du brevet:
**08.02.95 Bulletin 95/06**

(84) Etats contractants désignés:
**DE GB IT**

(56) Documents cités:
| | |
|---|---|
| EP-A- 176 055 | EP-A- 0 435 039 |
| DE-C- 936 738 | US-A- 4 476 178 |
| US-A- 4 481 257 | US-A- 4 668 579 |
| US-A- 4 863 798 | US-A- 4 868 056 |

PATENT ABSTRACTS OF JAPAN vol. 14, no. 290 (C-731)(4233) 22 Juin 1990 & JP-A-2 091 270 ( KAWASAKI STEEL CORP ) 30 Mars 1990

(73) Titulaire: **SOCIETE EUROPEENNE DE PROPULSION**
**24, rue Salomon de Rothschild**
**F-92150 Suresnes (FR)**

(72) Inventeur: **Vandenbulcke, Lionel**
**131bis, rue Demay**
**F-45650 Saint Jean Le Blanc (FR)**
Inventeur: **Goujard, Stéphane**
**11, allée Paul Doumer**
**F-33700 Merignac (FR)**
Inventeur: **Tawil, Henri**
**Nouveau Longchamp,**
**34, avenue Léon Blum**
**F-33110 Le Bouscat (FR)**
Inventeur: **Cavalier, Jean-Claude**
**Chemin Molinier Louens**
**F-33290 le Pian Médoc (FR)**

(74) Mandataire: **Joly, Jean-Jacques et al**
**Cabinet Beau de Loménie**
**158, rue de l'Université**
**F-75340 Paris Cédex 07 (FR)**

## Description

La présente invention concerne la protection contre l'oxydation des matériaux composites contenant du carbone, en particulier les matériaux composites thermostructuraux.

Les matériaux composites thermostructuraux sont formés d'une texture de renfort fibreuse constituée de fibres réfractaires et densifiée par une matrice également en matériau réfractaire. Ils sont caractérisés par des propriétés mécaniques qui les rendent aptes à constituer des éléments de structure, et par la capacité de conserver ces propriétés mécaniques à des températures élevées. Ces matériaux trouvent des applications en particulier dans les domaines spatial et aéronautique.

Le matériau constitutif des fibres de la texture de renfort est généralement le carbone ou une céramique telle que le carbure de silicium (SiC).

De même, le matériau constitutif de la matrice est généralement le carbone ou une céramique telle que le carbure de silicium.

La matrice est formée de façon bien connue en soi par voie liquide ou par voie gazeuse.

Dans le premier cas, la texture fibreuse est imprégnée par un précurseur de la matrice, par exemple une résine, puis est soumise à un traitement thermique par lequel le matériau de la matrice est obtenu par transformation du précurseur. Plusieurs cycles consécutifs imprégnation-traitement thermique peuvent être réalisés.

Dans le deuxième cas, la texture fibreuse est placée dans une enceinte dans laquelle est admise une phase gazeuse qui se décompose ou réagit dans des conditions particulières de température et de pression pour former un dépôt sur les fibres de la texture, dans tout le volume de celle-ci. Des procédés d'infiltration chimique en phase vapeur de matériaux tels que le carbone ou des céramiques (par exemple le carbure de silicium ou un oxyde réfractaire, tel qu'alumine ou zircone) sont bien connus. On pourra en particulier se référer aux documents FR-A-2 189 207, FR-A-2 401 888 et EP-A-0 085 601.

Les matériaux composites thermostructuraux usuels sont donc les matériaux carbone/carbone (C/C), carbone/céramique (C/céramique) et céramique/céramique.

Dans le cas de matériaux céramique/céramique, par exemple SiC/SiC, il est connu d'interposer entre les fibres et la matrice une couche d'interphase qui améliore le comportement mécanique du matériau. Comme indiqué dans le document EP-A-0 172 082, cette interphase est constituée par du pyrocarbone ou du nitrure de bore.

Ainsi, dans la plupart des cas, les matériaux composites thermostructuraux contiennent du carbone, que ce soit dans les fibres de renfort, dans la matrice, ou dans une interphase entre les fibres et la matrice.

Pour des applications à température élevée, il est donc impératif de protéger le matériau pour éviter sa détérioration sous l'effet de la disparition du carbone par oxydation.

Il existe un état de la technique très abondant concernant la protection anti-oxydation des matériaux composites contenant du carbone. Les techniques utilisées font souvent appel à un revêtement externe du matériau composite par une couche formant barrière vis-à-vis de l'oxygène, typiquement une couche de carbure de silicium. Cette protection est habituellement complétée par un dépôt d'éléments qui constituent, ou sont susceptibles de constituer à température élevée, un verre de type borate, silicate ou borosilicate ayant des propriétés cicatrisantes vis-à-vis de fissures pouvant apparaître dans le revêtement de carbure de silicium.

A titre d'exemple d'illustration de l'état de la technique, il peut être fait référence aux documents US-A-4 668 579 et EP-0 176 055.

Dans le document US-A-4 668 579 (invention Strangman et al), la protection anti-oxydation d'un matériau composite C/C est réalisée en formant au moins une couche de protection comprenant une partie interne de carbure de bore et une partie externe de carbure de silicium. De préférence, la couche de protection est formée avant densification complète du matériau composite, typiquement après l'étape de consolidation du renfort fibreux, c'est-à-dire après qu'une densification partielle ait été réalisée qui soit juste suffisante pour lier entre elles les fibres du renfort. L'épaisseur de chaque partie de la couche de protection est comprise entre 0,5 et 5 microns.

Dans le document EP-A-0 176 055 (invention Holzl et al), la protection anti-oxydation d'un corps en carbone (qui peut être en composite C/C) est réalisée en procédant d'abord à une attaque chimique du corps en carbone par un oxyde de bore pour former des interstices qui s'étendent jusqu'à une profondeur déterminée et occupent la moitié environ du volume initial du corps en carbone jusqu'à cette profondeur. La porosité ainsi créée est comblée par introduction de silicium ou d'un alliage de silicium donnant, par réaction, une couche formée de borure de silicium et de carbure de silicium à parts sensiblement égales. Un revêtement de surface supplémentaire, par exemple en carbure de silicium, est formé avec ou sans couche intermédiaire de bore ou d'un composé du bore. Le corps de carbone ainsi traité montre une très bonne tenue à l'oxydation dans l'air à une température d'environ 1 370°C.

La présente invention a pour but de fournir un procédé permettant une protection accrue contre l'oxydation des matériaux composites contenant du carbone, pour des températures de service pouvant aller jusqu'à au moins 1 500°C.

Ce but est atteint grâce à un procédé comprenant la formation, sur le matériau composite, d'une couche interne, d'une couche intermédiaire contenant du bore ou un composé du bore, et d'une couche externe en carbure desilicium, procédé selon lequel, conformément à l'invention, la couche interne déposée sur le matériau composite, avant la couche intermédiaire, est en un carbure réfractaire ne contenant pas de bore et a une épaisseur au moins égale à 60 microns, cette couche interne isolant la couche intermédiaire du carbone contenu dans le matériau composite.

Ainsi, contrairement à ce qui est rencontré dans l'état de la technique évoquée plus haut, la couche interne du revêtement de protection anti-oxydation ne contient pas de bore.

Cette couche interne en carbure réfractaire, par exemple carbure de silicium, de zirconium ou de hafnium, constitue une barrière supplémentaire contre l'oxygène. Mais sa fonction principale est d'empêcher le carbone contenu dans le matériau composite de réagir avec le verre de type borate ou borosilicate formé avec le bore de la couche intermédiaire, et d'empêcher la diffusion vers l'extérieur des espèces gazeuses provenant de l'oxydation du carbone. Pour une raison analogue, le procédé conforme à l'invention est plus particulièrement destiné à assurer la protection anti-oxydation de matériaux composites ne comportant pas de bore, autour des fibres ou au sein de la matrice, que ce soit sous forme de bore élémentaire, de carbure de bore, ou de borure de silicium alliés ou non entre eux ou à d'autres éléments, à l'exception toutefois du nitrure de bore pouvant être formé en interphase entre les fibres et la matrice.

La couche intermédiaire contenant du bore peut être constituée par du bore élémentaire ou un composé du bore, tel que, par exemple du carbure de bore.

Avantageusement, les couches interne, intermédiaire et externe sont formées par dépôt chimique en phase vapeur. Ainsi, le traitement anti-oxydation peut être réalisé dans une même enceinte en une même opération, et en utilisant un support approprié des pièces à revêtir, en faisant varier la composition de la phase gazeuse et d'autres paramétres (température, pressions) pour obtenir le dépôt souhaité.

L'invention concerne aussi un matériau composite contenant du carbone muni d'une protection anti-oxydation par un procédé tel que défini ci-avant.

Différents exemples de mise en oeuvre de l'invention seront maintenant décrits, à titre indicatif mais non limitatif.

Sur les dessins annexés,
- la figure 1 illustre une installation permettant le dépôt d'une protection anti-oxydation conformément à l'invention, et
- les figures 2 à 6 montrent des courbes illustrant la variation de la perte de masse en fonction de la durée de traitement d'oxydation pour des pièces en matériau composite munies d'une protection anti-oxydation conforme à l'invention et pour des pièces en matériau composite munies d'une protection anti-oxydation selon l'art antérieur.

Dans les exemples donnés ci-après, les matériaux composites munis d'une protection anti-oxydation sont de type bidimensionnel (2D) ou tridimensionnel (3D), en carbone/carbone (C/C) ou carbone/carbure de silicium (C/SiC : texture fibreuse de renfort en fibres de carbone densifiée par une matrice essentiellement en carbure de silicium).

Un matériau composite 2D est un matériau dans lequel les fibres du renfort forment un système bidimensionnel. La texture de renfort est constituée par du tissu ou des nappes de fils ou de câbles éventuellement en quelques couches superposées.

Un matériau composite 3D est un matériau dans lequel les fibres du renfort forment un système tridimensionnel. La texture de renfort est par exemple obtenue par tissage tridimensionnel ou par superposition et liaison entre elles de strates bidimensionnelles de tissus, feutres, nappes de fils ou de câbles, ... , les liaisons entre strates étant réalisées par aiguilletage, implantation de fils, ...

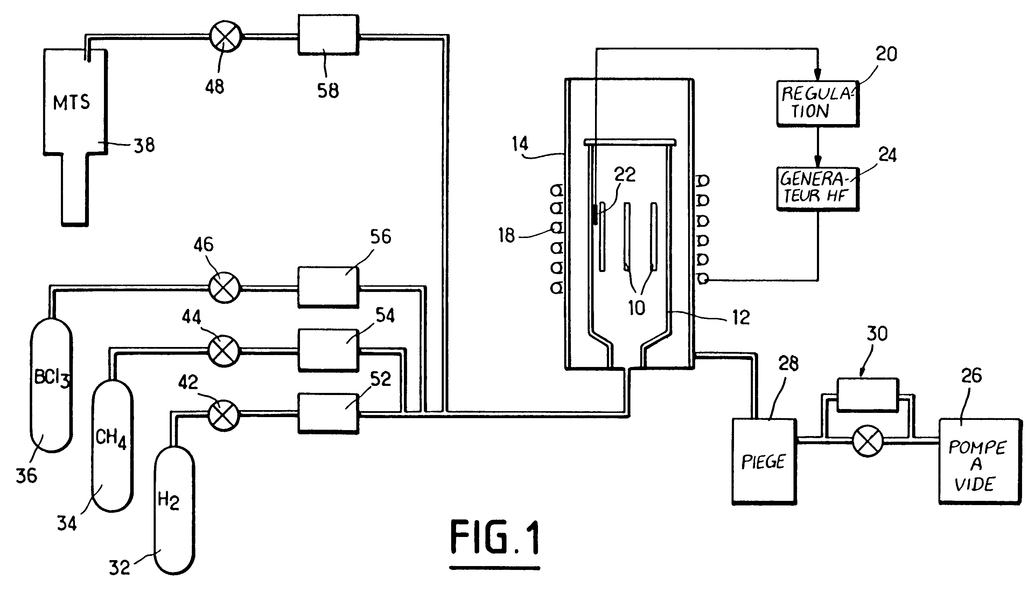

Dans tous les exemples, le matériau composite est muni d'une protection anti-oxydation par un processus de dépôt chimique en phase vapeur. A cet effet, une installation telle que celle illustrée par la figure 1 annexée a été utilisée.

Les pièces 10 en matériau composite à traiter sont disposées dans un suscepteur en graphite 12, à l'intérieur d'un réacteur 14. Les pièces 10 sont maintenues dans le réacteur au moyen d'un dispositif de support approprié ou par suspension au moyen de fils de tungstène, par exemple. Le chauffage du suscepteur est assuré par un inducteur 18 disposé autour du réacteur 14.

Un circuit de régulation 20 reçoit un signal fourni par un thermocouple 22, représentant la température à l'intérieur du suscepteur, et commande un générateur haute fréquence 24, qui alimente l'inducteur 18, afin de maintenir la température dans le suscepteur à une valeur désirée.

Le flux gazeux donnant le dépôt souhaité sur les pièces 10 pénètre dans le suscepteur à l'extrémité inférieure de celui-ci. Les gaz résiduels s'échappent à l'extrémité supérieure du suscepteur, à l'intérieur du réacteur 14. Celui-ci est relié à une pompe à vide 26. Un dispositif 28 de piégeage à azote liquide est disposé sur la conduite reliant le réacteur à la pompe à vide afin de recueillir les produits condensables. Une vanne de régulation 30, en amont de la pompe à vide 26, permet de maintenir la pression dans le réacteur 14 et le suscepteur 12 à une valeur désirée.

Des sources de gaz fournissent les constituants du flux gazeux introduit dans le suscepteur. Plusieurs sources de gaz peuvent être prévues, par exemple quatre sources 32, 34, 36, 38, qui sont ou non utilisées en fonction de la composition du flux gazeux correspondant au dépôt à former. Chaque source est reliée au réacteur par une canalisation comprenant une vanne d'arrêt à commande automatique, respectivement 42, 44, 46, 48 et un débitmètre massique, respectivement 52, 54, 56, 58, les débitmètres permettent de réguler les proportions relatives des constituants du flux gazeux.

Dans les exemples qui suivent, il est prévu de former des dépôts de carbure de silicium (SiC), bore (B), ou carbure de bore ($B_4C$).

A cet effet, les sources 32, 34, 36, 38 sont respectivement des sources d'hydrogène ($H_2$), méthane ($CH_4$), chlorure de bore ($BCl_3$) et méthyltrichlorosilane ou MTS ($CH_3SiCl_3$), la source de MTS étant constituée par un évaporateur.

Une installation telle que succinctement décrite ci-avant est bien connue. Elle est normalement utilisée comme suit. Après installation des pièces à traiter 10 dans le suscepteur 12, le volume interne du réacteur 14 est mis sous vide et balayé par de l'hydrogène à la pression requise. Le chauffage du suscepteur est démarré et, lorsque la température requise est atteinte, les gaz constituant le flux gazeux correspondant au dépôt à effectuer sont admis dans le suscepteur, les débitmètres ayant été réglés aux valeurs désirées. Au bout d'un temps prédéterminé correspondant à l'épaisseur souhaitée du dépôt, l'arrivée du flux gazeux est interrompue, le chauffage est arrêté et le suscepteur refroidit sous balayage d'hydrogène. Après retour à la pression atmosphérique, les pièces 10 revêtues du dépôt voulu sont retirées du réacteur.

Lorsque plusieurs dépôts différents superposés doivent être réalisés, comme c'est le cas pour la formation d'un revêtement anti-oxydation conformément à l'invention, ceux-ci peuvent être formés sans retrait des pièces entre deux dépôts. Lorsqu'un dépôt a été réalisé, il suffit d'interrompre l'arrivée du flux gazeux, de régler la température et la pression correspondant au dépôt suivant, sous balayage d'hydrogène, puis, lorsque la température et la pression requises sont atteintes, d'admettre le flux gazeux correspondant au nouveau dépôt à former.

Exemple 1

On utilise des échantillons parallélépipédiques de dimensions 20 x 10 x 3 mm en composite C/C 3D. De façon connue en soi, ceux-ci sont formés par empilement et aiguilletage de strates de tissu rectangulaires en fibres de carbone, pour former une structure de renfort, et densification de la structure de renfort par infiltration chimique en phase vapeur pour former la matrice en carbone.

Les échantillons sont munis d'un revêtement anti-oxydation par dépôt chimique en phase vapeur, successivement d'une couche interne de SiC, d'une couche intermédiaire en $B_4C$ et d'une couche externe de SiC.

La couche interne de SiC est obtenue à partir d'un flux gazeux constitué par un mélange de MTS et $H_2$, la température dans le suscepteur étant de 1 050°C et la pression de 300 torr (environ $4.10^4$ N/m²). Les débits de MTS et $H_2$ sont dans un rapport de 1 à 10 environ. Le dépôt est poursuivi jusqu'à atteindre l'épaisseur désirée.

La couche intermédiaire de $B_4C$ est obtenue à partir d'un flux gazeux constitué par un mélange de $CH_4$, $H_2$ et $BCl_3$, la température et la pression étant de 975°C et 300 torr (environ $4.10^4$ N/m²). Les débits de $CH_4$, $H_2$ et $BCl_3$ sont dans des rapports respectivement de 1 à 12 et 3,2 environ. Le dépôt est poursuivi jusqu'à atteindre l'épaisseur désirée.

La couche externe de SiC est formée comme la couche interne.

L'efficacité de la protection anti-oxydation est vérifiée en soumettant les échantillons traités à des cycles d'oxydation sous air à des températures élevées, et en mesurant la variation de masse relative dm/m des échantillons, une perte de masse signifiant la disparition du carbone par oxydation.

Le tableau I ci-après montre les résultats obtenus avec des échantillons revêtus d'une couche interne de SiC de 120 microns d'épaisseur, d'une couche intermédiaire de $B_4C$ de 10 microns et d'une couche externe de SiC de 60 microns, pour différents traitements d'oxydation. A titre comparatif, le résultat obtenu avec un échantillon revêtu uniquement d'une couche de SiC est également montré.

4

## TABLEAU I

| Nature du composite | Epaisseurs des couches de revêtement anti-oxydation (microns) | | | Traitement d'oxydation (température et durée) | Variation de masse dm/m (%) |
|---|---|---|---|---|---|
| | SiC (int) | $B_4C$ | SiC (ext) | | |
| C/C 3D | 120 | – | – | 1 300°C – 60 h +1 500°C – 60 h | – 7 |
| C/C 3D | 120 | 10 | 60 | 1 300°C – 60 h +1 500°C – 60 h | –0,08 |
| C/C 3D | 120 | 10 | 60 | 1 500°C – 30 h | –0,01 |
| C/C 3D | 120 | 10 | 60 | 1 500°C – 120 h | –0,9 |

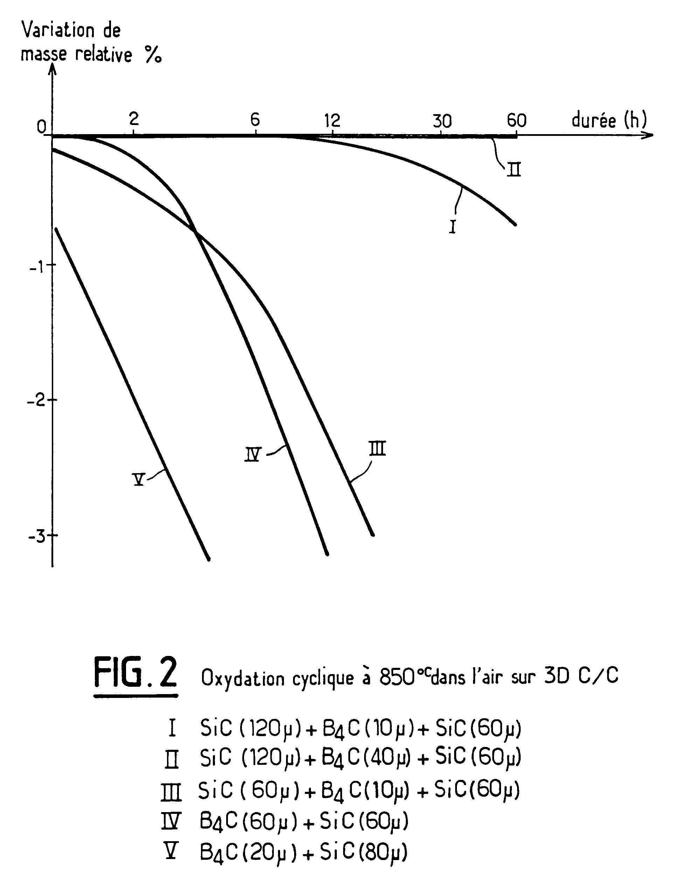

Les courbes de la figure 2 montrent l'évolution en fonction du temps de la variation de masse relative pour un traitement d'oxydation sous air à 850°C. Le traitement d'oxydation est réalisé de façon cyclique avec une montée en température à 850°C et un refroidissement à température ambiante toutes les heures pendant les six premières heures puis toutes les six heures jusqu'à la fin des premières 60 heures, l'oxydation étant ensuite poursuivie de façon isotherme. La courbe I est relative à un échantillon revêtu d'une couche interne de SiC de 120 microns, d'une couche intermédiaire de $B_4C$ de 10 microns et d'une couche externe de SiC de 60 microns. La courbe II montre des résultats de mesures analogues de variation de masse relative pour un échantillon revêtu d'une couche interne de SiC de 120 microns, d'une couche intermédiaire de $B_4C$ de 40 microns et d'une couche externe de SiC de 60 microns. La courbe III montre des résultats de mesures analogues pour un échantillon revêtu d'une couche interne de SiC de 60 microns, d'une couche intermédiaire de $B_4C$ de 10 microns et d'une couche externe de SiC de 60 microns. A titre comparatif, les courbes IV et V de la figure 2 montrent les résultats de mêmes mesures effectuées sur des échantillons C/C 3D analogues revêtus d'une protection anti-oxydation selon l'art antérieur constituée d'une couche de $B_4C$, respectivement de 60 et de 20 microns d'épaisseur, recouverte par une couche externe de SiC de 60 et de 80 microns, respectivement.

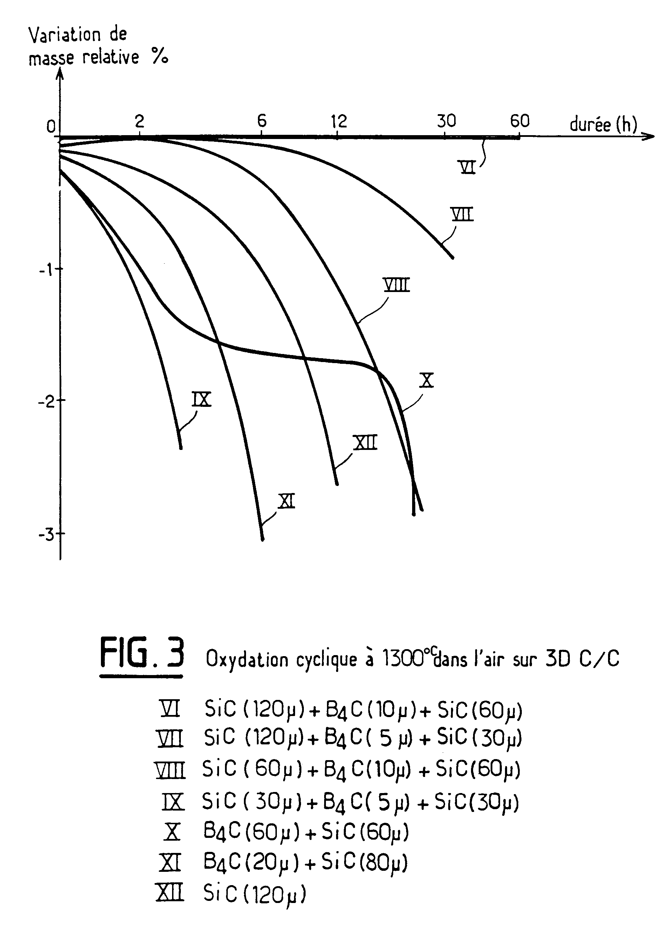

Les courbes VI à XII de la figure 3 montrent l'évolution en fonction du temps de la variation de masse relative pour un traitement d'oxydation cyclique sous air à 1 300°C sur des échantillons en composite C/C 3D munis de revêtements anti-oxydation. Les compositions de ces revêtements sont données ci-après dans le tableau II pour les échantillons correspondant aux différentes courbes :

TABLEAU II

|  | Epaisseur couche interne SiC (microns) | Epaisseur couche inter-médiaire $B_4C$ (microns) | Epaisseur couche externe SiC (microns) |
|---|---|---|---|
| courbe VI | 120 | 10 | 60 |
| courbe VII | 120 | 5 | 30 |
| courbe VIII | 60 | 10 | 60 |
| courbe IX | 30 | 5 | 30 |
| courbe X | 0 | 60 | 60 |
| courbe XI | 0 | 20 | 80 |
| courbe XII | 120 | 0 | 0 |

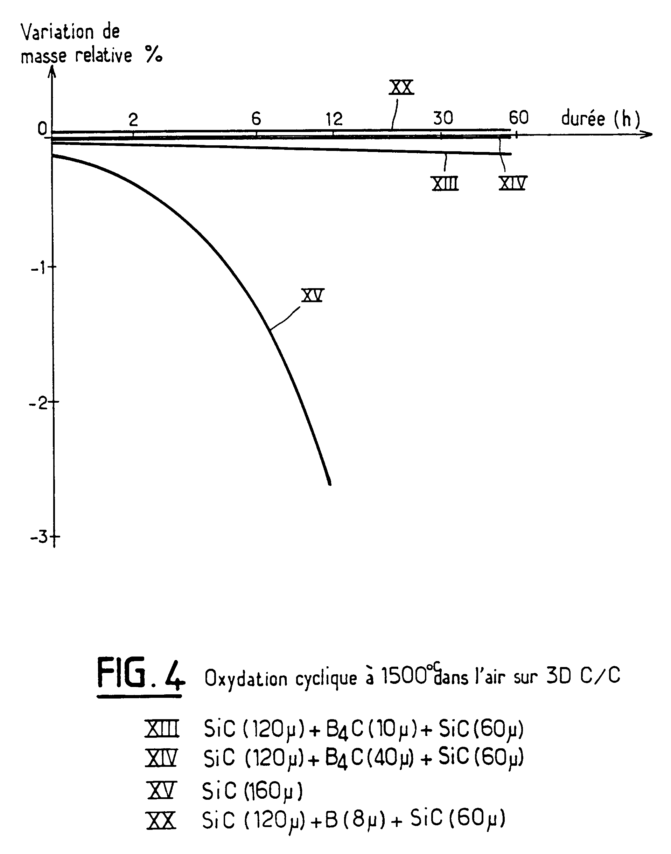

Les courbes XIII, XIV et XV de la figure 4 montrent l'évolution en fonction du temps de la variation de masse relative pour un traitement d'oxydation cyclique sous air à 1 500°C, toujours pour des échantillons en composite C/C 3D munis de revêtements anti-oxydation comprenant, respectivement :
- pour la courbe XIII, une couche interne SiC de 120 microns, une couche intermédiaire $B_4C$ de 10 microns et une couche externe SiC de 60 microns,
- pour la courbe XIV, une couche interne SiC de 120 microns, une couche intermédiaire $B_4C$ de 40 microns et une couche externe SiC de 60 microns,
- pour la courbe XV, une couche unique SiC de 160 microns.

Le tableau I et les courbes des figures 2 à 4 mettent en évidence l'excellente tenue à l'oxydation des échantillons protégés conformément à l'invention (faibles pertes de masse).

La comparaison entre les courbes VI, VII, VIII, d'une part, et les courbes X et XI, d'autre part amène à la même conclusion.

Les courbes III et VIII semblent indiquer que cette couche interne de SiC ne commence à remplir son rôle que pour une épaisseur au moins égale à 60 microns. Une épaisseur minimale supérieure à 60 microns, proche de 120 microns, apparaît même préférable pour des durées d'oxydation - plus longues, d'après les courbes I, II, VI et VIII. La courbe IX montre qu'une couche interne de SiC d'épaisseur égale à 30 microns ne procure pas de bons résultats.

Les courbes XII et XV, qui correspondent à un revêtement de protection selon l'art antérieur formé d'une couche unique de SiC de 120 microns d'épaisseur, montrent des résultats bien inférieurs à ceux obtenus avec la combinaison SiC-$B_4$C-SiC selon l'invention.

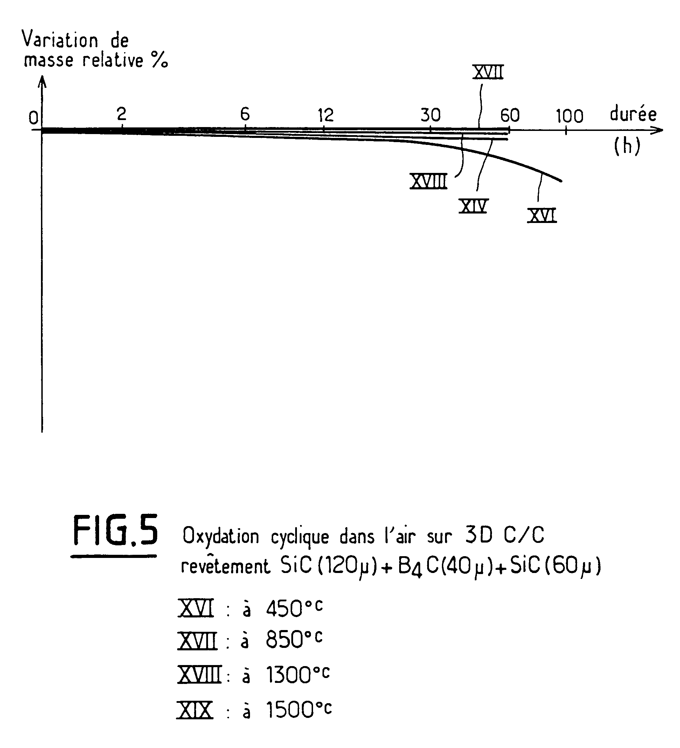

On notera encore que le procédé selon l'invention apporte une protection anti-oxydation efficace à différentes températures. Ceci ressort de la figure 5 dont les courbes XVI à XIX montrent les résultats obtenus lors de traitements d'oxydation cycliques sous air respectivement à 450°C, 850°C, 1 300°C et 1 500°C sur les échantillons précités en composite C/C 3D munis d'un revêtement formé d'une couche interne SiC de 120 microns d'une couche intermédiaire $B_4C$ de 40 microns et d'une couche externe SiC de 60 microns (les courbes XVII et XIX sont identiques aux courbes II et XIV respectivement).

Exemple 2

On utilise des échantillons cylindriques de diamètre 25 mm et d'épaisseur 5 mm en composite C/C 3D, échantillons obtenus par densification par infiltration chimique en phase vapeur de carbone au sein d'une texture de renfort formée de strates de tissu de carbone en forme de disques empilées et aiguilletées.

Les échantillons sont munis d'une protection anti-oxydation comme dans l'exemple 1, les épaisseurs des couches de SiC interne, $B_4$C et SiC externe étant respectivement de 120 microns, 10 microns et 60 microns.

Après traitement d'oxydation cyclique dans l'air à 1 300°C pendant 60 h puis à 1 500°C pendant 60 h, la perte de masse relative mesurée est seulement de 0,9 %.

Exemple 3

On utilise des échantillons parallélépipédiques de dimensions 20 x 10 x 2 mm en composite C/SiC 2D. Ces échantillons sont obtenus par formation d'une texture fibreuse 2D en carbone (empilement de quelques strates de tissu de carbone) suivie d'infiltration chimique en phase vapeur du SiC.

Les échantillons sont munis d'une protection anti-oxydation comme dans l'exemple 1. Le tableau III ci-après montre les résultats obtenus après traitement d'oxydation cyclique d'échantillons pour différentes épaisseurs des couches de protection. A titre comparatif, un essai a été effectué sur un échantillon muni d'un revêtement anti-oxydation constitué d'une couche unique de SiC d'épaisseur égale à 185 microns sur les faces de l'échantillon et de 50 microns sur la tranche de celui-ci.

## TABLEAU III

| Nature du composite | Epaisseur des couches de revêtement anti-oxydation (microns) | | | Traitement d'oxydation (température et durée) | Variation de masse $dm/m$ (%) |
|---|---|---|---|---|---|
| | SiC (int) | $B_4C$ | SiC (ext) | | |
| C/SiC 2D | 240 | 10 | 60 | 1 300°C – 60 h +1 500°C – 60 h | –1,2 |
| C/SiC 2D | 120 | 5 | 40 | 1 300°C – 60 h | –0,3 |
| C/SiC 2D | 185 (sur les faces) 50 (sur la tranche) | 0 | 0 | 1 500°C – 60 h | – 32 |

L'épaisseur indiquée pour la couche de SiC interne est l'épaisseur totale de SiC déposé à l'extérieur des strates de tissu de carbone.

Les résultats obtenus avec le revêtement SiC-$B_4$C-SiC sont sensiblement du même ordre que ceux obtenus sur composite C/C, et considérablement supérieurs au résultat obtenu avec le revêtement SiC unique.

Exemple 4

On utilise des échantillons cylindriques de diamètre 25 mm et d'épaisseur 2,5 mm en composite C/SiC 2D, obtenus par empilement de disques de tissu en carbone, suivi d'une infiltration chimique en phase vapeur du SiC. Les échantillons sont munis d'un revêtement de protection anti-oxydation comme dans l'exemple 1. Le tableau IV ci-après montre les résultats obtenus après traitement d'oxydation cyclique pour différentes épaisseurs des couches de protection.

7

## TABLEAU IV

| Nature du composite | Epaisseurs des couches de revêtement anti-oxydation (microns) | | | Traitement d'oxydation (température et durée) | Variation de masse dm/m (%) |
|---|---|---|---|---|---|
| | SiC (int) | $B_4C$ | SiC (ext) | | |
| C/SiC 2D | 180 | 10 | 60 | 1 300°C – 65 h +1 500°C – 40 h | –0,2 |
| C/SiC 2D | 120 | 10 | 60 | 1 300°C – 40 h +1 500°C – 65 h | –0,5 |

Les résultats sont du même ordre que ceux obtenus sur les échantillons C/C 3D. Là encore, on notera que l'épaisseur de la couche SiC interne est l'épaissuer totale de SiC déposé à l'extérieur des strates de tissu carbone.

Exemple 5

On utilise des échantillons de composite C/C 3D identiques à ceux de l'exemple 1.

Les échantillons sont munis d'un revêtement anti-oxydation par dépôt chimique en phase vapeur, successivement, d'une couche interne de SiC, d'une couche intermédiaire de B et d'une couche externe de SiC.

Les couches de SiC sont formées comme dans l'exemple 1.

La couche intermédiaire de B est obtenue à partir d'un flux gazeux constitué par un mélange de $BCl_3$ et de $H_2$, la température dans le suscepteur étant de 950°C et la pression de 300 torr (environ $4.10^4$ N/m$^2$). Les débits de $BCl_3$ et de $H_2$ sont dans un rapport de 1 à 22, environ. Le dépôt est poursuivi jusqu'à atteindre l'épaisseur désirée.

Le tableau V ci-après donne les résultats de tests d'oxydation cycliques obtenus pour différentes épaisseurs des couches de protection.

## TABLEAU V

| Nature du composite | Epaisseurs des couches de revêtement anti-oxydation (microns) | | | Traitement d'oxydation (température et durée) | Variation de masse dm/m (%) |
|---|---|---|---|---|---|
| | SiC (int) | B | SiC (ext) | | |
| C/C 3D | 120 | 8 | 60 | 1 300$^o$C – 60 h +1 500$^o$C – 60 h | +0,03 |
| C/C 3D | 120 | 8 | 60 | Précontrainte * 80 MPa sur une face puis 1 300$^o$C – 7 h et 1 500$^o$C – 40 h | –0,12 |
| C/C 3D | 120 | 4 | 30 | 1 300$^o$C – 60 h +1 500$^o$C – 60 h | +0,05 |
| C/C 3D | 120 | 4 | 30 | Précontrainte * 80 MPa sur une face puis 1 300$^o$C – 7 h et 1 500$^o$C – 40 h | –0,20 |

\* La précontrainte est réalisée en flexion 3 points sur appuis rapprochés : 2 points d'appui sur une face et effort exercé sur l'autre face au niveau du milieu entre les 2 points d'appui.

Ce tableau montre l'excellence des résultats obtenus par le procédé selon l'invention. Les variations de masse légèrement positives peuvent s'expliquer par oxydation de SiC et B en $SiO_2$ et $B_2O_3$, respectivement

La courbe XX de la figure 4 montre la variation en fonction du temps de la perte de masse par traitement d'oxydation cyclique à 1 500°C effectué sur un échantillon de composite C/C 3D muni d'un revêtement SiC interne (120 microns)-B (8 microns)-SiC externe (60 microns). On observe l'excellente tenue du matériau.

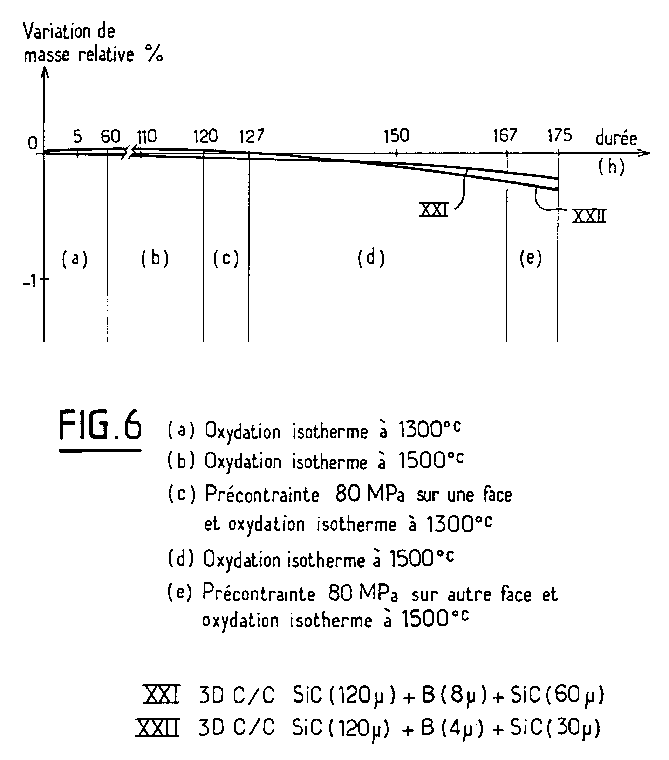

Les courbes XXI et XXII de la figure 6 montrent la variation en fonction du temps de la perte de masse par traitement effectué sur des echantillons de composite C/C 3D munis de revêtement respectivement constitué de SiC interne (120 microns)-B (8 microns)-SiC externe (60 microns) et SiC interne (120 microns)-B (4 microns)-SiC externe (30 microns). Le traitement effectué comprenait 5 étapes consécutives respectivement : (a) oxydation isotherme à 1 300°C pendant 60 h, (b) oxydation isotherme à 1 500°C pendant 60 h, (c) oxydation isotherme à 1 300°C pendant 7 h après précontrainte (flexion 3 points) de 80 MPa sur une face, (d) oxydation isotherme à 1 500°C pendant 40 h, et (e) oxydation isotherme à 1 500°C pendant 8 h après précontrainte de 80 MPa sur l'autre face de l'échantillon. Cette précontrainte est d'environ 35 % de la contrainte à rupture initiale du matériau.

Les courbes XXI et XXII témoignent de l'excellente protection conférée par la combinaison SiC-B-SiC en dépit de précontraintes génératrices de fissures, et ce jusqu'à 1 500°C.

Exemple 6

On utilise des échantillons parallélepipédiques en composite C/SiC 2D identiques à ceux de l'exemple 3. Les échantillons sont munis d'une protection SiC(interne)-B-SiC (externe) comme dans l'exemple 5. Le tableau VI donne les résultats de tests d'oxydation cycliques obtenus pour différentes épaisseurs des couches de protection.

## TABLEAU VI

| Nature du composite | Epaisseurs des couches de revêtement anti-oxydation (microns) | | | Traitement d'oxydation (température et durée) | Variation de masse dm/m (%) |
|---|---|---|---|---|---|
| | SiC (int) | B | SiC (ext) | | |
| C/SiC 2D | 155 | 4 | 20 | 1 300°C - 60 h +1 500°C - 60 h | -0,35 |
| C/SiC 2D | 180 | 8 | 60 | 1 300°C - 60 h +1 500°C - 60 h | -0,4 |
| C/SiC 2D | 180 | 8 | 60 | Précontrainte * 150 MPa sur une face +1 500°C - 8 h | -0,6 |
| C/SiC 2D | 240 | 8 | 60 | 1 300°C - 60 h +1 500°C - 60 h | -0,10 |

\* Précontrainte en flexion 3 points.

Les résultats obtenus avec la couche intermédiaire B apparaissent un peu supérieurs à ceux obtenus avec la couche intermédiaire B₄C.

Dans les exemples qui viennent d'être donnés, les matériaux composites utilisés sont de type C/C 3D et C/SiC 2D. Bien évidemment, le procédé conforme à l'invention ne saurait être limité à ces matériaux composites particuliers ; il s'applique à tous les composites contenant du carbone, notamment les composites de type C/C, C/céramique et céramique/céramique dans lesquels la texture de renfort est de type 2D ou 3D.

# EP 0 486 347 B1

**Revendications**

1. Procédé pour la protection anti-oxydation de matériau composite contenant du carbone, comprenant la formation, sur le matériau composite, d'une couche interne, d'une couche intermédiaire contenant du bore ou un composé du bore, et d'une couche externe en carbure de silicium, caractérisé en ce que la couche interne, formée sur le matériau composite avant la couche intermédiaire, est en un carbure réfractaire ne contenant pas de bore et a une épaisseur au moins égale à 60 microns, cette couche interne isolant la couche intermédiaire du carbone contenu dans le matériau composite.

2. Procédé selon la revendication 1, caractérisé en ce que l'on choisit le matériau de la couche interne parmi les carbures de silicium, de zirconium et de hafnium.

3. Procédé selon l'une quelconque des revendications 1 et 2, caractérisé en ce que l'on choisit le matériau de la couche intermédiaire parmi le carbure de bore et le bore élémentaire.

4. Procédé selon l'une quelconque des revendications 1 à 3, caractérisé en ce que la couche interne, la couche intermédiaire et la couche externe sont formées par dépôt chimique en phase vapeur.

5. Matériau composite contenant du carbone, muni d'un revêtement de protection anti-oxydation comprenant une couche interne, une couche intermédiaire contenant du bore ou un composé du bore et une couche externe en carbure de silicium, caractérisé en ce que la couche interne est en carbure réfractaire ne contenant pas de bore et a une épaisseur au moins égale à 60 microns, la couche interne isolant la couche intermédiaire contenant du bore, ou un composé du bore, du carbone contenu dans le matériau composite.

6. Matériau composite selon la revendication 5, caractérisé en ce que la couche interne est en un carbure choisi parmi le carbure de silicium, le carbure de zirconium et le carbure de hafnium.

7. Matériau composite selon l'une quelconque des revendications 5 et 6, caractérisé en ce que la couche intermédiaire est en un matériau choisi parmi le carbure de bore et le bore élémentaire.

**Claims**

1. Method of providing anti-oxidation protection for a composite material containing carbon, the method comprising forming, on the composite material, an inner layer, an intermediate layer containing boron or a boron compound, and an outer layer of silicon carbide, characterized in that the inner layer formed on the composite material before the intermediate layer is formed, is made of a refractory carbide that does not contain boron and that is at least 60 microns thick, said inner layer insulating the intermediate layer from the carbon contained in the composite material.

2. Method according to claim 1, characterized in that the material for the inner layer is a carbide selected from silicon carbide, zirconium carbide, and hafnium carbide.

3. Method according to any one of claims 1 and 2, characterized in that the material for the intermediate layer is selected from boron carbide and elemental boron.

4. Method according to any one of claims 1 to 3, characterized in that the inner layer, the intermediate layer, and the outer layer are all formed by chemical vapor deposition.

5. Composite material containing carbon and provided with an anti-oxidation protective coating comprising an inner layer, an intermediate layer containing boron or a boron compound, and an outer layer of silicon carbide, characterized in that the inner layer is made of a refractory carbide that does not contain boron and that is at least 60 microns thick, the inner layer insulating the intermediate layer containing boron or a compound of boron from the carbon contained in the composite material.

6. Composite material according to claim 5, characterized in that the inner layer is a carbide selected from silicon carbide, zirconium carbide, and hafnium carbide.

11

**7.** Composite material according to any one of claims 5 and 6, characterized in that the intermediate layer is made of a material selected from boron carbide and elemental boron.

**Patentansprüche**

**1.** Verfahren zum Schutz eines Verbundwerkstoffes gegen Oxidation, der Kohlenstoff enthält, bei dem auf dem Verbundwerkstoff eine innere Schicht, eine Zwischenschicht, die Bor oder eine Borverbindung enthält, und eine äußere Schicht aus Siliciumcarbid gebildet wird,
**dadurch gekennzeichnet, daß**
die innere Schicht, die auf dem Verbundwerkstoff vor der Zwischenschicht gebildet wird, aus hitzefestem Carbid besteht, das kein Bor enthält, und die eine Dicke von wenigstens 60 Mikron hat, und
die innere Schicht die Zwischenschicht aus Kohlenstoff, die in dem Verbundwerkstoff enthalten ist, isoliert.

**2.** Verfahren nach Anspruch 1,
**dadurch gekennzeichnet, daß**
man das Material der inneren Schicht aus Silicium-, Zirconium- und Hafniumcarbid auswählt.

**3.** Verfahren nach Anspruch 1 oder 2,
**dadurch gekennzeichnet, daß**
man das Material der Zwischenschicht aus Borcarbid und elementarem Bor auswählt.

**4.** Verfahren nach einem der Ansprüche 1 bis 3,
**dadurch gekennzeichnet, daß**
die innere Schicht, die Zwischenschicht und die äußere Schicht durch chemische Ablagerung in der Dampfphase gebildet werden.

**5.** Kohlenstoff enthaltender Verbundwerkstoff, der mit einer Antioxidations-Schutzschicht versehen ist und der eine innere Schicht, eine Bor oder eine Borverbindung enthaltende Zwischenschicht und eine äußere Siliciumcarbidschicht enthält,
**dadurch gekennzeichnet, daß**
die innere Schicht aus hitzefestem Carbid besteht, das kein Bor enthält, und eine Dicke von wenigstens 60 Mikron hat, und
die innere Schicht die Zwischenschicht, die Bor oder eine Borverbindung enthält, von dem im Verbundwerkstoff enthaltenen Kohlenstoff isoliert.

**6.** Verbundwerkstoff nach Anspruch 5,
**dadurch gekennzeichnet, daß**
die innere Schicht ein Carbid ist, das aus Silicium-, Zirconium- und Hafniumcarbid ausgewählt ist.

**7.** Verbundwerkstoff nach Anspruch 5 oder 6,
**dadurch gekennzeichnet, daß**
die Zwischenschicht aus einem Material besteht, das aus Borcarbid und elementarem Bor ausgewählt ist.

FIG.1

MTS — 38

48 — 58

BCl₃ — 36
CH₄ — 34
H₂ — 32

46 — 56
44 — 54
42 — 52

14
22
18
10
12

REGULA-TION — 20

GENERA-TEUR HF — 24

PIEGE — 28

30

POMPE A VIDE — 26

EP 0 486 347 B1

**FIG.2**  Oxydation cyclique à 850°C dans l'air sur 3D C/C

I   SiC (120μ) + B$_4$C (10μ) + SiC (60μ)

II  SiC (120μ) + B$_4$C (40μ) + SiC (60μ)

III SiC ( 60μ) + B$_4$C (10μ) + SiC (60μ)

IV  B$_4$C (60μ) + SiC (60μ)

V   B$_4$C (20μ) + SiC (80μ)

FIG. 3  Oxydation cyclique à 1300°C dans l'air sur 3D C/C

| VI | SiC (120μ) + B$_4$C (10μ) + SiC (60μ) |
| VII | SiC (120μ) + B$_4$C ( 5μ) + SiC (30μ) |
| VIII | SiC ( 60μ) + B$_4$C (10μ) + SiC (60μ) |
| IX | SiC ( 30μ) + B$_4$C ( 5μ) + SiC (30μ) |
| X | B$_4$C (60μ) + SiC (60μ) |
| XI | B$_4$C (20μ) + SiC (80μ) |
| XII | SiC (120μ) |

**FIG. 4** Oxydation cyclique à 1500°C dans l'air sur 3D C/C

| | |
|---|---|
| XIII | SiC $(120\mu)$ + $B_4$C $(10\mu)$ + SiC $(60\mu)$ |
| XIV | SiC $(120\mu)$ + $B_4$C $(40\mu)$ + SiC $(60\mu)$ |
| XV | SiC $(160\mu)$ |
| XX | SiC $(120\mu)$ + B $(8\mu)$ + SiC $(60\mu)$ |

FIG.5 Oxydation cyclique dans l'air sur 3D C/C
revêtement SiC (120µ) + B$_4$C(40µ) + SiC(60µ)

XVI : à 450°c

XVII : à 850°c

XVIII : à 1300°c

XIX : à 1500°c

Variation de
masse relative %

FIG.6  (a) Oxydation isotherme à 1300°C

(b) Oxydation isotherme à 1500°C

(c) Précontrainte 80 MPa sur une face
et oxydation isotherme à 1300°C

(d) Oxydation isotherme à 1500°C

(e) Précontrainte 80 MPa sur autre face et
oxydation isotherme à 1500°C

XXI  3D C/C  SiC(120µ) + B(8µ) + SiC(60µ)

XXII  3D C/C  SiC(120µ) + B(4µ) + SiC(30µ)